# EUROPÄISCHE PATENTSCHRIFT

(11) **EP 4 220 095 B1**
(45) Veröffentlichungstag und Bekanntmachung des Hinweises auf die Patenterteilung: **03.09.2025**
(21) Anmeldenummer: 23152478.6
(22) Anmeldetag: 19.01.2023
(51) Int. Cl.: G01D 5/14, G01P 1/02, G01P 3/487

(54) **DREHGEBER MIT GENERATOR ZUR AUTARKEN ENERGIEVERSORGUNG**
ROTARY ENCODER WITH SELF-SUFFICIENT ENERGY SUPPLY GENERATOR
CAPTEUR DE ROTATION DOTÉ D'UN GÉNÉRATEUR POUR L'ALIMENTATION AUTONOME EN ÉNERGIE

(30) Priorität: 28.01.2022 DE 102022000343
(43) Veröffentlichungstag der Anmeldung: 02.08.2023
(73) Patentinhaber: Baumer Germany GmbH & Co. KG, 78333 Stockach (DE)
(72) Erfinder: Otto, Kai-Hans, 12526 Berlin (DE); Pham, Michal, 13585 Berlin (DE); Reinauer, Torsten, 78465 Konstanz (DE); Steuer, Christian, 13509 Berlin (DE)
(74) Vertreter: Strauss, Steffen

(56) Entgegenhaltungen:
- EP-B1- 1 687 592
- DE-B3- 102015 114 384
- US-A1- 2010 253 327

## Beschreibung

Die Erfindung betrifft einen Drehgeber zum Erfassen von Informationen einer rotierenden Welle, wobei der Drehgeber einen Generator zur autarken Energieversorgung des Drehgebers aufweist.

Herkömmliche Drehgeber dienen dazu, Messgrößen wie Winkelstellung, Drehzahl, Drehrichtung und/oder Winkelbeschleunigung einer rotierenden Welle eines Antriebes zu erfassen und an eine Steuerung zum Steuern bzw. Regeln des Antriebes zu übermitteln. Hierbei können die Drehgeber auch dazu genutzt werden, die erfassten Messgrößen zwischen zu speichern und über eine statistische Auswertung eine Zustandsüberwachung durchzuführen. In der Regel werden die erfassten Messgrößen als elektrisch codierte Signale an die Steuerung übermittelt, wozu in der Regel eine Energieversorgung des Drehgebers erforderlich ist.

Aus der EP 1 687 592B1 ist ein Drehgeber mit einem Generator zur autarken Energieversorgung des Drehgebers bekannt. Bei dem aus der EP 1 687 592 B1 bekannten Drehgeber werden Paare von Blockmagneten zur Erzeugung von Spannungsimpulsen eingesetzt, welche zur autarken Energieversorgung des Drehgebers dienen. Durch diese räumlich getrennten Paare von Blockmagneten werden, insbesondere bei hohen Bewegungsgeschwindigkeiten bzw. Drehzahlen der rotierenden Welle, neben einem erwünschten Spannungsimpuls (Hauptimpuls) in der Regel auch unerwünschte Vor- und Nachimpulse generiert, wie dies beispielsweise in der Figur 5 der EP 1 687 592 B1 dargestellt ist. Um ein Signal zu generieren, welches einen höheren Pegel als die Vor- und Nachimpulse aufweist, müsste in der aus der EP1687592B1 bekannten Vorrichtung ein sehr kleiner Luftspalt gewählt werden, da sonst die generierten Spannungsimpulse einen zu niedrigen Pegel aufwiesen und nicht von den Vor- und Nachimpulsen getrennt werden könnten. Insbesondere bei einem Achsversatz zwischen der Antriebswelle und dem Generator ist das erzeugte Magnetfeld nicht mehr ausreichend.

Aus der US 2010/253327 A1 ist eine Vorrichtung und ein Verfahren zum Messen von Verschiebungen eines rotierenden oder linear verschiebbaren Elements durch Zählen von Perioden seiner Verschiebung entlang eines vorbestimmten Verschiebungspfads bekannt.

Es ist eine Aufgabe der vorliegenden Erfindung, den aus der EP 1 687 592 B1 bekannten Drehgeber vorteilhaft weiterzubilden.

Diese Aufgabe wird durch einen Drehgeber zum Erfassen von Positions- und/oder Bewegungsinformationen einer rotierbaren Welle gemäß Anspruch 1 gelöst.

Der Drehgeber umfasst einen Generator mit einem Trägerkörper, einer Spule, die um einen Abschnitt des Trägerkörpers gewickelt ist, und einem Federelement, wobei das Federelement ausgebildet ist, in Reaktion auf ein sich zeitlich veränderndes Magnetfeld eine sprunghafte Hin- und Herbewegung durchzuführen und eine Spannung in der Spule zu induzieren, um den Drehgeber mit Energie zu versorgen. Der Drehgeber umfasst ferner eine Vielzahl von Magnetsegmenten, welche in Umlaufsrichtung aneinander angrenzend angeordnet und alternierend gepolt sind, um aufgrund einer Rotation der rotierbaren Welle das Federelement mit dem sich zeitlich verändernden Magnetfeld zu beaufschlagen. Aufgrund des erfindungsgemäßen nahtlosen Übergangs zwischen benachbarten Magnetsegmenten mit unterschiedlicher Polung wird hierdurch im Wesentlichen nur der erwünschte Spannungsimpuls, d.h. der Hauptimpuls erzeugt. Unerwünschte Vor- und Nachimpulse, wie diese bei bekannten Drehgebern auftreten, können vermieden werden. Überdies ermöglicht es die erfindungsgemäße Ausgestaltung und Anordnung der Magnetsegmente, einen Luftspalt zwischen den Magnetsegmenten und dem Generator vorteilhaft groß zu wählen.

Das Federelement umfasst wenigstens bereichsweise ein magnetisch leitendes Material und/oder ist vollständig aus einem magnetisch leitenden Material ausgebildet. Bei diesem magnetisch leitenden Material kann es sich um ein ferromagnetisches Material, insbesondere einen weichmagnetischen Werkstoff, wie insbesondere Eisen und/oder Nickel und/oder Kobalt und/oder ein Ferrit oder Ferrite handeln.

Die Vielzahl der Magnetsegmente stehen bevorzugt mit der rotierbaren Welle in Wirkkontakt. Besonders bevorzugt sind die Vielzahl der Magnetsegmente mechanisch mit der rotierbaren Welle verbunden, um in Folge auf eine Rotationsbewegung der rotierenden Welle ein sich zeitlich veränderndes Magnetfeld zu erzeugen. Ganz besonders bevorzugt sind die Magnetsegmente mantelseitig zur rotierbaren Welle angeordnet.

Erfindungsgemäss besteht ein nahtloser Übergang zwischen benachbarten Magnetsegmenten unterschiedlicher Polung. Erfindungsgemäss bilden die Vielzahl der Magnetsegmente ein Ringelement aus, das umfangsseitig zur rotierbaren Welle anordenbar und/oder dort festlegbar ist.

Gemäß einer Ausführungsform kann die Vielzahl von Magnetsegmenten durch alternierend magnetisierte Abschnitte eines Materialstücks ausgebildet sein.

In einer weiteren Ausführungsform kann die Vielzahl von Magnetsegmenten durch eine Vielzahl von alternierend magnetisierten und in Umlaufsrichtung formschlüssig aneinander angrenzenden Materialstücken ausgebildet sein.

Gemäß einer Ausführungsform kann die Vielzahl von Magnetsegmenten die gleiche Größe und jeweils eine im Wesentlichen räumlich konstante Magnetisierung aufweisen.

In einer Ausführungsform kann der Drehgeber ferner eine Magnetträgerscheibe umfassen, wobei die Vielzahl von Magnetsegmenten auf der Magnetträgerscheibe ausgebildet sind und wobei die Magnetträgerscheibe ausgebildet ist, bei einer Rotation der rotierbaren Welle zu rotieren.

Gemäß einer Ausführungsform kann jedes der Vielzahl von Magnetsegmenten die Form eines Abschnitts eines Vollzylinders mit einem jeweiligen Querschnitt in Form eines Kreissektors aufweisen.

In einer weiteren Ausführungsform kann jedes der Vielzahl von Magnetsegmenten die Form eines Abschnitts eines Hohlzylinders mit einem jeweiligen Querschnitt in Form eines Kreisringsektors umfassen.

Gemäß einer Ausführungsform kann die Vielzahl von Magnetsegmenten vier Magnetsegmente umfassen, wobei jedes der vier Magnetsegmente einen Querschnitt in Form eines Kreisringsektors mit einem Winkel von 90° aufweist.

In einer Ausführungsform umfasst der Drehgeber eine Vielzahl von weiteren Magnetsegmenten und ist ausgebildet, aufgrund der Vielzahl von weiteren Magnetsegmenten die Positions- und/oder Bewegungsinformationen der rotierbaren Welle zu erfassen.

Gemäß einer Ausführungsform kann die Vielzahl von weiteren Magnetsegmenten eine Vielzahl von weiteren Abschnitten des Hohlzylinders mit einem jeweiligen Querschnitt in Form eines Kreisringsektors umfassen.

Gemäß einer Ausführungsform umfasst der Generator ferner ein erstes Kontaktelement und ein zweites Kontaktelement, welche ausgebildet und angeordnet sind, die Spule in einer vertikalen Ausrichtung und einer horizontalen Ausrichtung des Trägerkörpers elektrisch und/oder elektronisch mit weiteren Komponenten des Drehgebers zu verbinden.

Gemäß einer Ausführungsform können das erste Kontaktelement und/oder das zweite Kontaktelement einen Vierkantdraht oder ein Stanzteil, insbesondere ein Stanzbiegeteil umfassen.

In einer Ausführungsform können das erste Kontaktelement und/oder das zweite Kontaktelement einen Spulenkontaktabschnitt, einen Mittelabschnitt und einen Hauptkontaktabschnitt umfassen, wobei der jeweilige Hauptkontaktabschnitt zwei Kontaktflächen umfasst, die im Wesentlichen plan mit einer ersten Außenseite und einer zweiten senkrecht dazu verlaufenden Außenseite des Trägerkörpers verlaufen.

Gemäß einer Ausführungsform kann sich der Spulenkontaktabschnitt des ersten Kontaktelements im Wesentlichen senkrecht zu dem Mittelabschnitt des ersten Kontaktelements erstrecken und/oder der Spulenkontaktabschnitt des zweiten Kontaktelements kann sich im Wesentlichen senkrecht zu dem Mittelabschnitt des zweiten Kontaktelements erstrecken.

In einer Ausführungsform kann der Trägerkörper ein erstes Trägerkörperteil und ein zweites Trägerkörperteil umfassen, wobei das erste Trägerkörperteil und/oder das zweite Trägerkörperteil ein Spritzgussteil sind.

Gemäß einer Ausführungsform kann der Trägerkörper eine Kontaktelementausnehmung umfassen, in welcher das erste Kontaktelement zumindest teilweise aufgenommen ist, und/oder der Trägerkörper kann eine Kontaktelementausnehmung umfassen, in welcher das zweite Kontaktelement zumindest teilweise aufgenommen ist.

In einer Ausführungsform umfasst das Federelement eine Blattfeder, wobei ein erstes Ende der Blattfeder durch den Trägerkörper fixiert ist und sich ein zweites freies Ende der Blattfeder in einer Kavität des Trägerkörpers hin- und herbewegen kann.

In einer Ausführungsform umfasst der Drehgeber eine Generatorträgerscheibe wobei der Generator in einer vertikalen oder in einer horizontalen Anordnung auf der Generatorträgerscheibe befestigt ist.

Im Folgenden wird die Erfindung anhand von Ausführungsbeispielen und den Figuren näher beschrieben. In den Figuren zeigen:
- Fig. 1a, b: eine Seitenansicht und eine perspektivische Ansicht von Komponenten eines Drehgebers gemäß einer Ausführungsform mit einem Generator und mehreren auf einer Magnetträgerscheibe ausgebildeten Magnetsegmenten;
- Fig. 2a, b: eine Draufsicht und eine perspektivische Ansicht eines der mehreren Magnetsegmente des Drehgebers von Figur 1a, b;
- Fig. 3a, b: eine Draufsicht und eine perspektivische Ansicht der mehreren Magnetsegmente des Drehgebers von Figur 1a, b;
- Fig. 4a, b: eine perspektivische Ansicht und eine Draufsicht einer Vielzahl von Magnetsegmenten und einer weiteren Vielzahl von Magnetsegmenten eines Drehgebers gemäß einer Ausführungsform, die hülsenförmig um eine Antriebswelle angeordnet sind;
- Fig. 5a, b: eine Seitenansicht und eine perspektivische Ansicht von Komponenten eines Drehgebers gemäß einer Ausführungsform mit einem Generator und zwei halbzylinderförmigen Magnetsegmenten zur radialen Abtastung;
- Fig. 6a, b: eine Seitenansicht und eine perspektivische Ansicht von Komponenten eines Drehgebers gemäß einer Ausführungsform mit einem Generator und vier hülsenförmigen Magnetsegmenten zur radialen Abtastung;
- Fig. 7a: eine perspektivische Ansicht eines Generators eines Drehgebers gemäß einer Ausführungsform mit einem zweiteiligen Trägerkörper, einer Spule und zwei Kontaktelementen;
- Fig. 7b: eine perspektivische Ansicht eines Trägerkörperteils des zweiteiligen Trägerkörpers des Generators von Figur 7a;
- Fig. 7c: eine Explosionsdarstellung des Generators von Figur 7a;
- Fig. 7d, e: perspektivische Ansichten eines jeweiligen Kontaktelements eines Generators eines Drehgebers gemäß einer Ausführungsform;
- Fig. 8a: eine perspektivische Ansicht des Generators eines Drehgebers gemäß einer Ausführungsform in horizontaler Anordnung sowie eine Detailansicht des Kontaktbereichs des Generators;
- Fig. 8b: eine perspektivische Ansicht von Komponenten eines Drehgebers gemäß einer Ausführungsform mit einer Generatorträgerscheibe und dem auf der Generatorträgerscheibe in horizontaler Anordnung befestigten Generator;
- Fig. 9a: eine perspektivische Ansicht des Generators gemäß einer Ausführungsform in vertikaler Anordnung sowie eine Detailansicht des Kontaktbereichs des Generators; und
- Fig. 9b: eine perspektivische Ansicht von Komponenten eines Drehgebers gemäß einer Ausführungsform mit einer Generatorträgerscheibe und dem auf der Generatorträgerscheibe in vertikaler Anordnung befestigten Generator.

In der folgenden ausführlichen Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

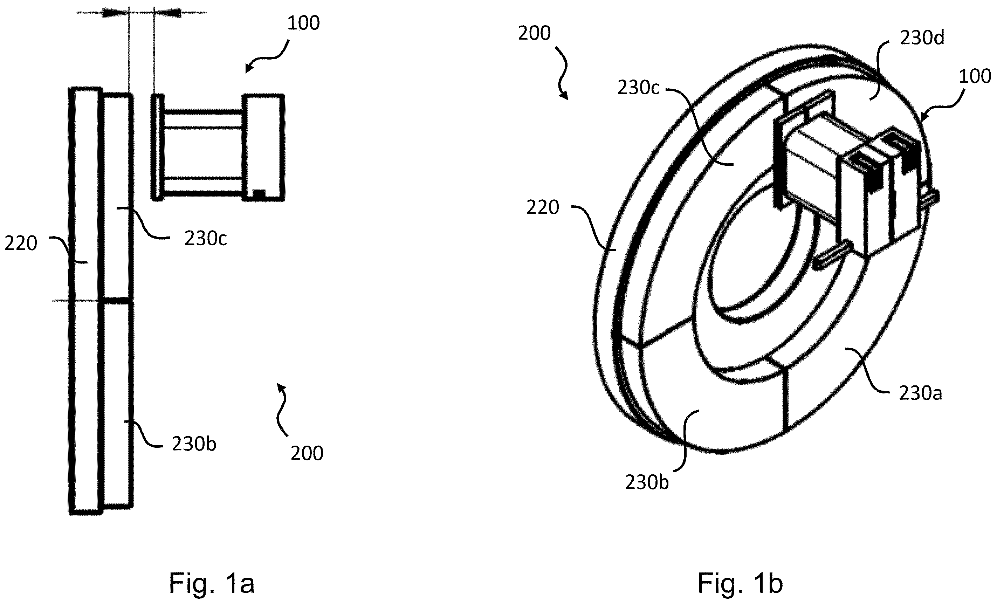

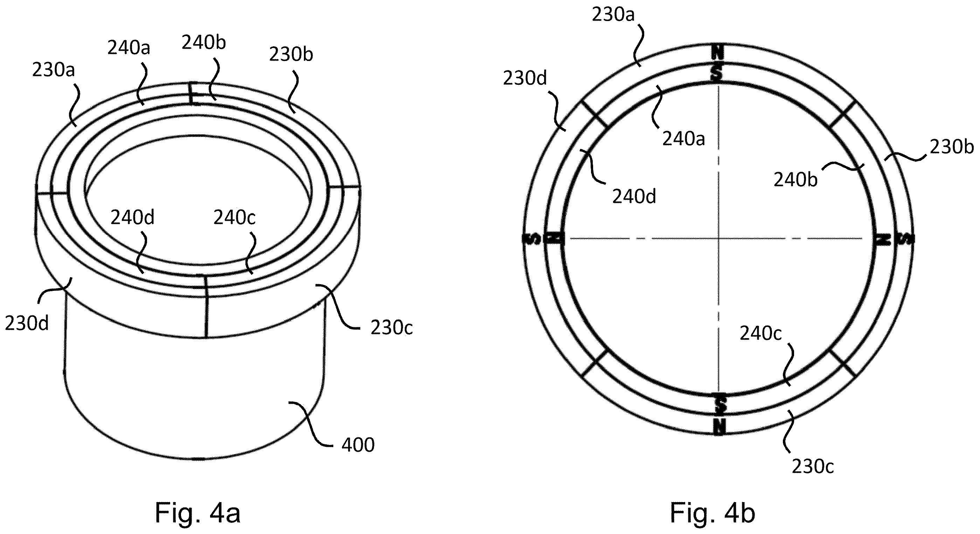

Die Figuren 1a und 1b zeigen eine Seitenansicht und eine perspektivische Ansicht von Komponenten eines Drehgebers 200 gemäß einer Ausführungsform zum Erfassen von Positions- und/oder Bewegungsinformationen einer um eine Rotationsachse RA rotierbaren Welle 400, beispielsweise einer Antriebswelle 400, wie diese in den Figuren 4a, b, 5a, b und 6a, b dargestellt ist. Bei den Positions- und/oder Bewegungsinformationen der rotierbaren Welle 400 kann es sich beispielsweise um eine Winkelstellung, Drehzahl, Drehrichtung und/oder Winkelbeschleunigung der rotierbaren Welle 400 handeln.

Wie dies nachstehend im Detail beschrieben wird, umfasst der Drehgeber 200 einen Generator 100 zur autarken Energieversorgung des Drehgebers 200 sowie eine Vielzahl von in Umlaufsrichtung aneinander angrenzend angeordneten und alternierend gepolten Magnetsegmenten 230a-d, welche sich bei einer Rotation der rotierbaren Welle 400 um die Rotationsachse RA relativ zu dem Generator 100 bewegen. Hierzu können die Magnetsegmente 230a-d auf einer Magnetträgerscheibe 220 ausgebildet sein, deren Rotation an die Rotation der rotierbaren Welle 400 um die Rotationsachse RA gekoppelt ist. Bei der in den Figuren 1a und 1b dargestellten Ausführungsform bilden die Vielzahl von Magnetsegmenten 230a-d im Wesentlichen eine kreisringförmige Scheibe und umfassen vier Magnetsegmente 230a-d, wobei jedes Magnetsegment 230a-d einen Viertelabschnitt der kreisringförmigen Scheibe ausbildet und der Mittelpunkt der kreisringförmigen Scheibe auf der Rotationsachse RA liegt. Mit anderen Worten: bei der in den Figuren 1a und 1b dargestellten Ausführungsform werden die vier Magnetsegmente 230a-d durch Abschnitte 230a-d eines Hohlzylinders mit einem jeweiligen Querschnitt in Form eines Kreisringsektors mit einem Winkel von 90° ausgebildet.

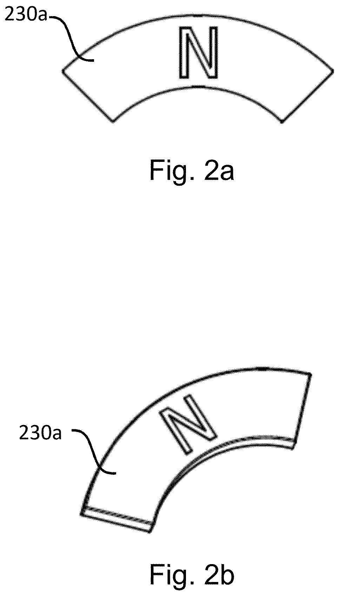

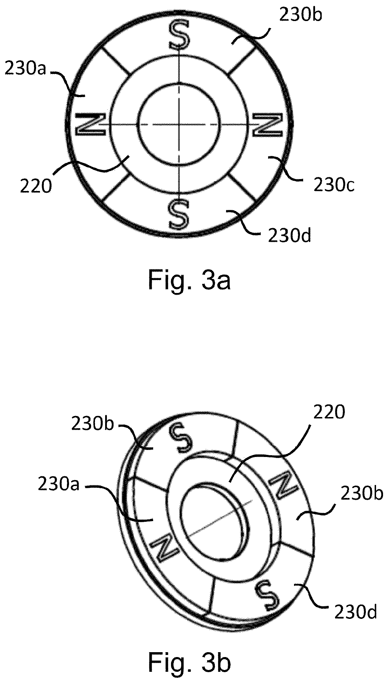

Die Figuren 2a und 2b zeigen eine Draufsicht und eine perspektivische Ansicht eines der Magnetsegmente 230a-d des in den Figuren 1a und 1b dargestellten Drehgebers 200. Die Figuren 3a und 3b zeigen eine Draufsicht und eine perspektivische Ansicht der auf der Magnetträgerplatte 220 ausgebildeten Magnetsegmente 230a-d des in den Figuren 1a und 1b dargestellten Drehgebers 200.

Wie sich dies den Figuren 3a und 3b entnehmen lässt, weisen jeweils benachbarte Magnetsegmente der Vielzahl von Magnetsegmenten 230a-d eine unterschiedliche Polung auf. Beispielhaft ist bei der in den Figuren 3a und 3b dargestellten Ausführungsform die jeweilige Magnetisierung der vier Magnetsegmente 230a-d derart gewählt, dass die Magnetsegmente 230a und 230c einen jeweiligen magnetischen Nordpol bilden und die Magnetsegmente 230b und 230d einen jeweiligen magnetischen Südpol bilden. In einer Ausführungsform können die Magnetsegmente 230a-d jeweils eine im Wesentlichen räumlich konstante Magnetisierung aufweisen.

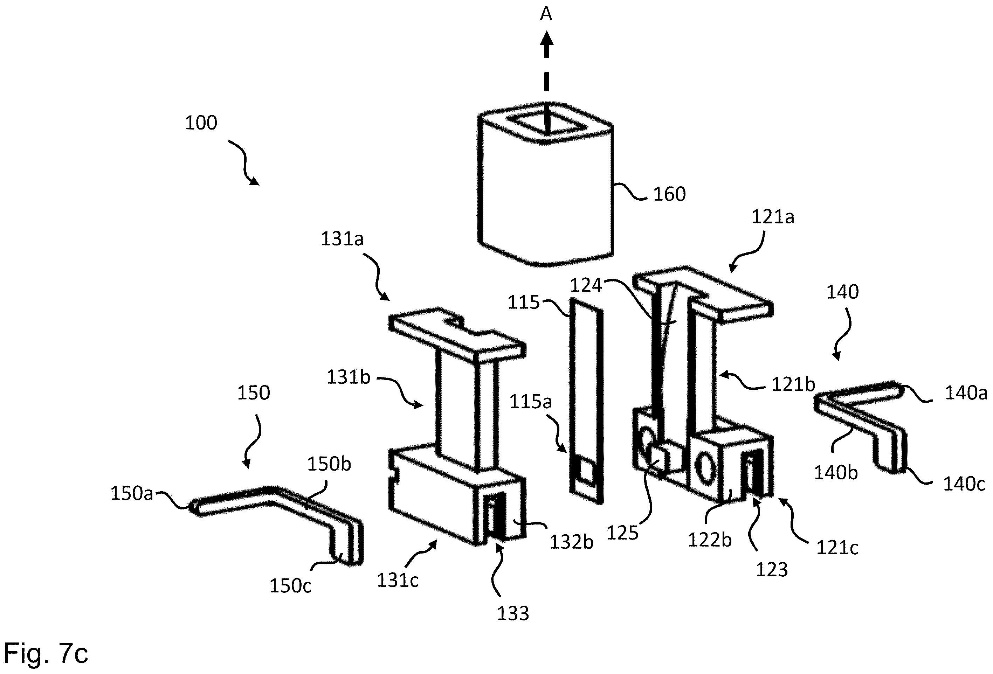

Bei einer Rotation der Magnetträgerscheibe 220 und der darauf angeordneten Magnetsegmente 230a-d relativ zu dem Generator 100 wird über einen in Figur 1a sichtbaren Luftspalt aufgrund eines sich durch die Rotation der Magnetsegmente 230a-d zeitlich ändernden Magnetfelds ein freies Ende eines magnetisch leitenden Federelements 115 (siehe Figur 7c) des Generators 100 sprunghaft hin- und her bewegt. Wie der Fachmann erkennt, ändert sich das auf den Generator 100 einwirkende Magnetfeld insbesondere dann, wenn aufgrund der Bewegung der Magnetsegmente 230a-d sich der Übergang von einem Magnetsegment zum nächsten benachbarten Magnetsegment unterhalb des Generators 100 befindet (beispielsweise der in Figur 1b dargestellte Übergang zwischen dem N-gepolten Magnetsegment 230c und dem benachbarten S-gepolten Magnetsegment 230d).

Aufgrund der durch das sich zeitlich ändernden Magnetfelds erzeugten Bewegung des freien Endes des magnetisch leitenden Federelements 115 innerhalb einer Spule 160 des Generators 100 wird ein Spannungsimpuls in der Spule 160 induziert, der zum Betreiben weitere Komponenten des Drehgebers 200, beispielsweise einer Auswerteelektronik des Drehgebers 200 zum Erfassen von Informationen der Antriebswelle 400 verwendet werden kann. Aufgrund des erfindungsgemäßen nahtlosen Übergangs zwischen benachbarten Magnetsegmenten 230a-d mit unterschiedlicher Polung wird dabei im Wesentlichen nur der erwünschte Spannungsimpuls, d.h. der Hauptimpuls erzeugt und die unerwünschten Vor- und Nachimpulse können vermieden werden, die bei dem aus der EP 1 687 592 B1 bekannten Drehgeber auftreten können. Zwischen dem Generator 100 und den Magnetsegmenten 230a-d kann vorteilhafterweise konstruktiv ein Luftspalt vorgesehen werden, der deutlich größer als bei bekannten Generatoren ist. Ein größerer Luftspalt erhöht einen möglichen Toleranzbereich zwischen Antriebswelle und Generator.

Die Figuren 4a und 4b zeigen eine perspektivische Ansicht und eine Draufsicht einer weiteren möglichen Ausführungsform der Vielzahl von Magnetsegmenten 230a-d. Bei der in den Figuren 4a und 4b gezeigten Ausführungsform sind die Magnetsegmente 230a-d als jeweils unterschiedlich gepolte Abschnitte einer kreisringförmigen Hülse ausgebildet, die auf der Antriebswelle 400 angeordnet und an diese gekoppelt ist. Bei der in den Figuren 4a und 4b dargestellten Ausführungsform umfasst der Drehgeber 200 neben den Magnetsegmenten 230a-d noch eine weitere Vielzahl von Magnetsegmenten 240a-d, die ebenso als jeweils unterschiedlich gepolte Abschnitte einer weiteren kreisringförmigen Hülse mit einem kleineren Radius ausgebildet sind. Mit anderen Worten: die weiteren Magnetsegmente 240a-d sind gegenüber den Magnetsegmenten 230a-d radial nach innen in Richtung der Antriebswelle 400 mit der Rotationsachse RA versetzt.

In einer Ausführungsform ist der Drehgeber 200 ausgebildet, mittels der weiteren Magnetsegmente 240a-d die Positions- und/oder Geschwindigkeitsinformationen der rotierbaren Welle 400 zu bestimmen. Obwohl in der in den Figuren 4a und 4b dargestellten Ausführungsform die Magnetsegmente 230a-d und die weiteren Magnetsegmente 240a-d jeweils vier Magnetsegmente umfassen, sind ebenfalls Ausführungsformen denkbar, bei denen die Magnetsegmente 230a-d und die weiteren Magnetsegmente 240a-d eine unterschiedliche Anzahl von Magnetsegmenten aufweisen. Beispielsweise können die Magnetsegmente 230a-d zur Energieversorgung des Drehgebers 200 vier Magnetsegmente aufweisen und die weiteren Magnetsegmente 240a-d zur Positions- und/oder Geschwindigkeitsbestimmung der rotierbaren Welle 400 acht Magnetsegmente umfassen.

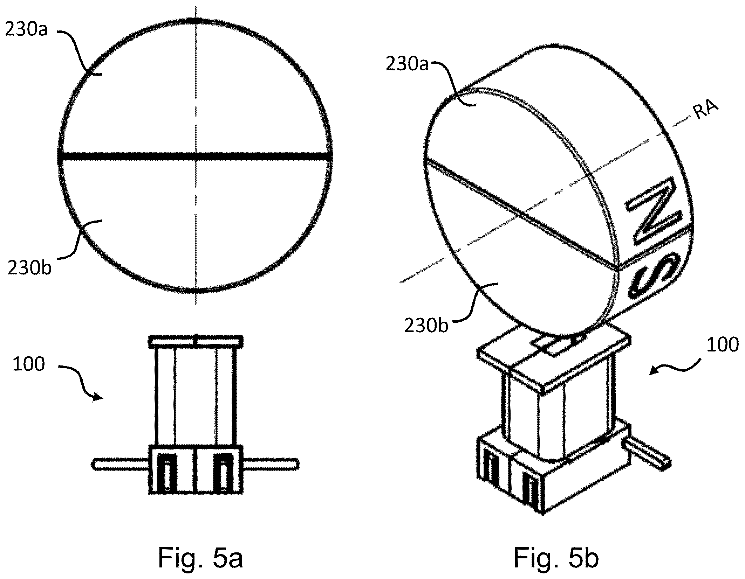

Die Figuren 5a und 5b zeigen eine Seitenansicht und eine perspektivische Ansicht von Komponenten des Drehgebers 200 gemäß einer weiteren Ausführungsform mit dem Generator 100 und zwei halbzylinderförmigen Magnetsegmenten 230a, b zur radialen Abtastung. Bei der in den Figuren 5a und 5b gezeigten Ausführungsform werden die zwei Magnetsegmente 230a, b somit durch zwei Abschnitte 230a, b eines Vollzylinders mit einem jeweiligen Querschnitt in Form eines Kreissektors mit einem Winkel von 180° ausgebildet.

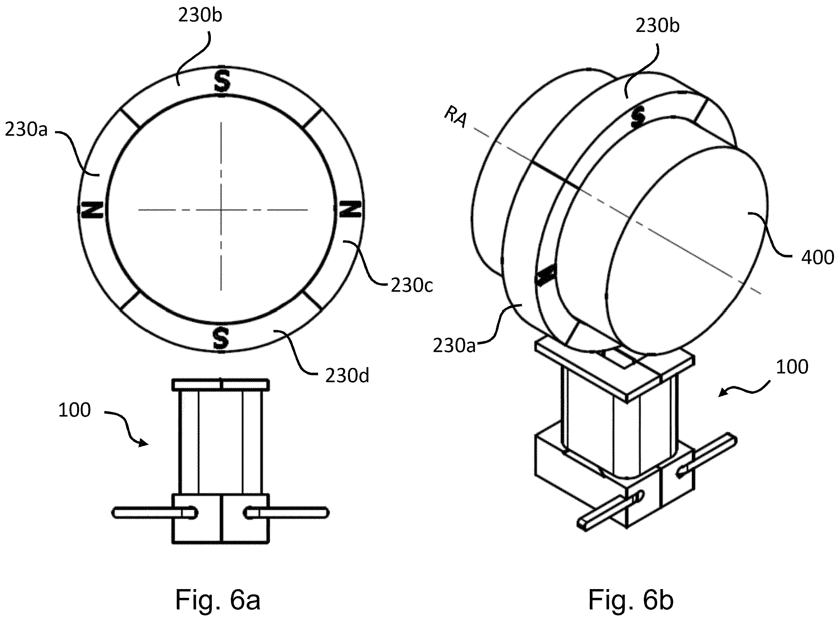

Die Figuren 6a und 6b zeigen eine Seitenansicht und eine perspektivische Ansicht von Komponenten des Drehgebers 200 gemäß einer weiteren Ausführungsform mit dem Generator 100 und vier Magnetsegmenten 230a-d zur radialen Abtastung. Bei der in den Figuren 6a und 6b dargestellten Ausführungsform sind die vier Magnetsegmente 230a-d als jeweils unterschiedlich gepolte Abschnitte einer kreisringförmigen Hülse ausgebildet, die auf der rotierbaren Welle 400 angeordnet und an diese gekoppelt ist (ähnlich zu in den Figuren 4a und 4b dargestellten Ausführungsform, jedoch ohne die weiteren Magnetsegmente 240a-d).

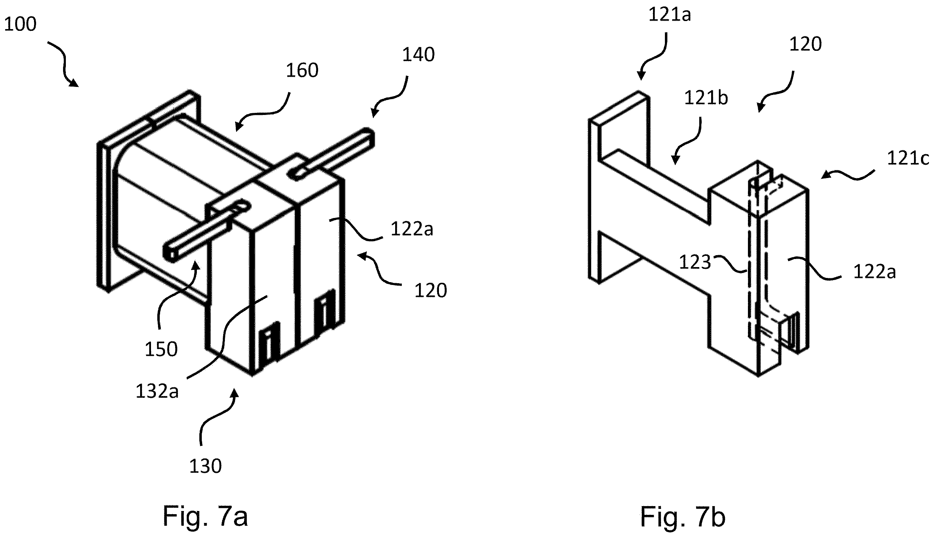

Die Figur 7a zeigt eine perspektivische Detailansicht des Generators 100 des Drehgebers 200 gemäß einer Ausführungsform. Bei der in Figur 7a dargestellten Ausführungsform umfasst der Generator 100 einen zweiteiligen Trägerköper, der aus einem ersten Trägerkörperteil 120 und einem zweiten Trägerkörperteil 130 ausgebildet ist. Figur 7b zeigt eine perspektivische Ansicht des ersten Trägerkörperteils 120 des zweiteiligen Trägerkörpers des Generators 100 von Figur 7a (wobei der zweite Trägerkörperteil 130 spiegelsymmetrisch ausgebildet ist). Gemäß einer Ausführungsform können der erste und der zweite Trägerkörperteil im Wesentlichen aus einem Kunststoff bestehen, der elektrisch nichtleitend ist. In einer Ausführungsform kann der erste und der zweite Trägerkörperteil 120, 130 mittels einem Spritzgussverfahren hergestellt werden.

Wie sich dies der in Figur 7c gezeigten Explosionsdarstellung des Generators 100 von Figur 7a entnehmen lässt und wie bereits vorstehend erwähnt, umfasst der Generator 100 ferner eine Spule 160 sowie ein erstes Kontaktelement 140 und ein zweites Kontaktelement 150. Wie sich dies aus einer Zusammenschau der Figuren 7a-c ergibt, ist die Spule 160 um mittlere Abschnitte 121b und 131b des ersten und zweiten Trägerkörperteils 120, 130 gewickelt. Wie in Figur 7c dargestellt, definiert die Spule 160 eine Generatorachse A.

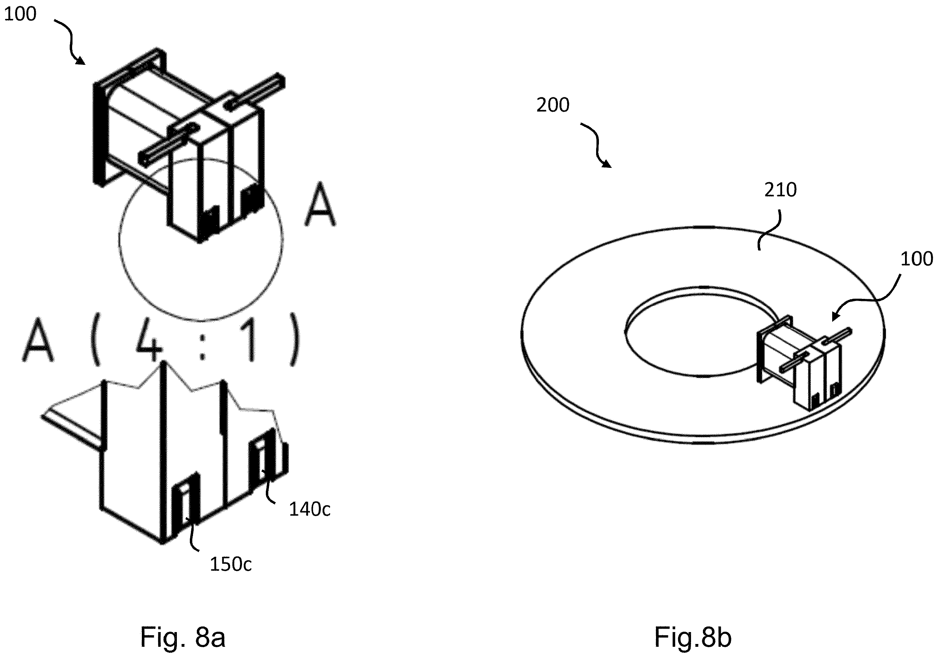

Der erste und zweite Trägerkörperteil 120, 130 umfassen ferner jeweils einen oberen Abschnitt 121a, 131b sowie jeweils einen unteren Kontaktabschnitt 121c, 131c. Wie sich dies beispielsweise der Figur 8a entnehmen lässt, können die oberen Abschnitte 121a, 131a, die mittleren Abschnitte 121b, 131b sowie die unteren Kontaktabschnitte 121c, 131c des ersten und zweiten Trägerkörperteils 120, 130 im Wesentlichen quaderförmig ausgebildet sein. Wie sich dies insbesondere der Figur 7b entnehmen lässt, umfassen die unteren Kontaktabschnitte 121c, 131c des ersten und zweiten Trägerkörperteils 120, 130 eine jeweilige Ausnehmung 123, 133, in welcher das jeweilige Kontaktelement 140, 150 aufgenommen ist.

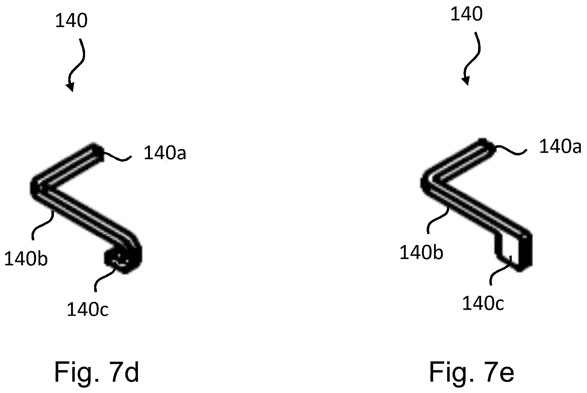

Die Figuren 7d und 7e zeigen perspektivische Ansichten von zwei möglichen Ausführungsformen des ersten und zweiten Kontaktelements 140, 150 (wobei exemplarisch nur das erste Kontaktelement 140 dargestellt ist). In der Ausführungsform von Figur 7d ist das erste Kontaktelement 140 als Vierkantdraht 140 ausgebildet. In der Ausführungsform von Figur 7e ist das erste Kontaktelement 140 als Stanzbiegeteil 140 ausgebildet (auch in Figur 7c dargestellt). In beiden Ausführungsformen umfassen das erste Kontaktelement 140 und das zweite Kontaktelement 150 jeweils einen Spulenkontaktabschnitt 140a, 150a, einen Mittelabschnitt 140b, 150b sowie einen Hauptkontaktabschnitt 140c, 150c. Die Spulenkontaktabschnitte 140a, 150a sind beispielsweise über einen jeweiligen Draht mit der Spule 160 verbunden und die Hauptkontaktabschnitte 140c, 150c dienen dazu, den Generator 100 elektrisch und/oder elektronisch, beispielsweise über eine Bus-Verbindung mit weiteren Komponenten des Drehgebers 200, beispielsweise einer Platine, einer Steuerung und/oder einer Auswerteeinheit zu verbinden.

Wenn das erste bzw. zweite Kontaktelement 140, 150 in der jeweiligen Ausnehmung 123, 133 der unteren Kontaktabschnitte 121c, 131c des ersten und zweiten Trägerkörperteils 120, 130 angeordnet ist, dann, wie sich dies einer Zusammenschau der Figuren 7a-c entnehmen lässt, erstreckt sich das jeweilige Kontaktelement 140, 150 von den Spulenkontaktabschnitten 140a, 150a über die Mittelabschnitte 140b, 150b durch den Trägerkörper zu den Hauptkontaktabschnitten 140c, 150c. Dabei können, wie in Figur 7a dargestellt, die Spulenkontaktabschnitte 140a, 150a in einem rechten Winkel zu den Mittelabschnitten 140b, 150b von einer Außenseite der Kontaktabschnitte 121c, 131c des jeweiligen Trägerkörperteils 120, 130 abstehen.

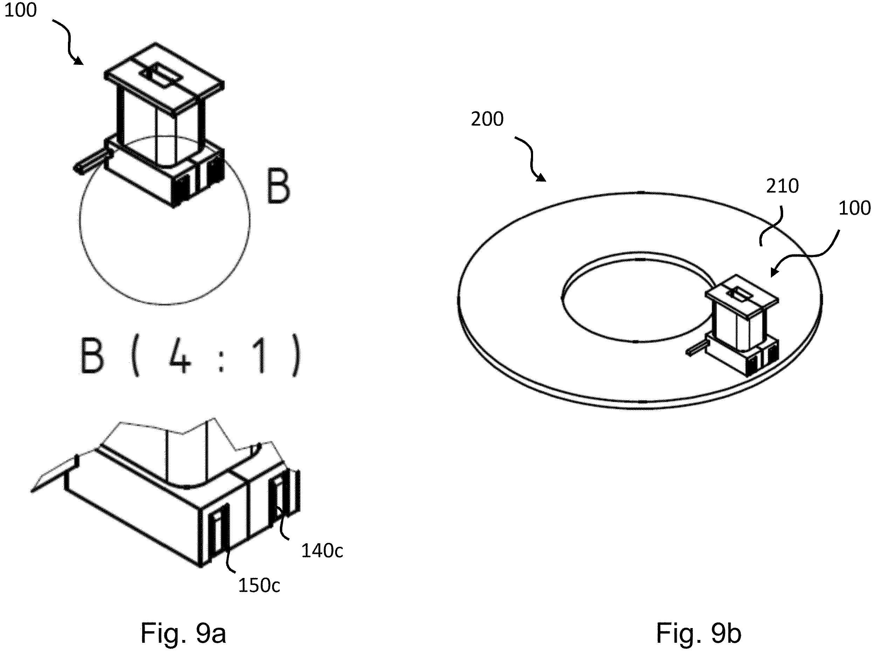

Wie dies insbesondere in den Figuren 7c-e dargestellt ist, umfasst der jeweilige Hauptkontaktabschnitt 140c, 150c des ersten und zweiten Kontaktelements 140, 150 eine erste Kontaktfläche und eine zweite Kontaktfläche, die in einem rechten Winkel zueinanderstehen. Wenn das erste bzw. zweite Kontaktelement 140, 150 in der jeweiligen Ausnehmung 123, 133 der unteren Kontaktabschnitte 121c, 131c des ersten und zweiten Trägerkörperteils 120, 130 angeordnet ist, dann, wie sich dies einer Zusammenschau der Figuren 7a-c entnehmen lässt, verlaufen die Kontaktflächen der Hauptkontaktabschnitte 140c, 150c des ersten und zweiten Kontaktelements 140, 150 im Wesentlichen plan mit einer ersten Außenseite und einer zweiten senkrecht dazu verlaufenden Außenseite des Trägerkörpers. Wie bereits vorstehend beschrieben, dienen die senkrecht zu einer stehenden Kontaktfläche der Hauptkontaktabschnitte 140c, 150c des ersten und zweiten Kontaktelements 140, 150 dazu, den Generator 100 elektrisch und/oder elektronisch, beispielsweise über eine Bus-Verbindung mit weiteren Komponenten des Drehgebers 200, beispielsweise einer Platine, einer Steuerung und/oder einer Auswerteeinheit zu verbinden. Wie dies nachstehend unter weiterer Bezugnahme auf die Figuren 8a, b und 9a, b beschrieben wird, ermöglicht diese erfindungsgemäße Ausgestaltung ein Verbauen des Generators 100 in dem Drehgeber 200 sowohl in einer horizontalen (d.h. mit horizontal verlaufender Generatorachse A) als auch in einer vertikalen Anordnung (d.h. mit einer horizontal verlaufender Generatorachse A) des Generators 100.

Wie in Figur 7c dargestellt und wie bereits vorstehend erwähnt, umfasst der Generator 100 ferner ein magnetisiertes Federelement 115, insbesondere eine Blattfeder 115. Die Blattfeder 115 ist mittels eines Federelementbefestigungsloches 115a, in das ein Federelementbefestigungsstutzen 125 eingreift, an einem Ende durch die Kontaktabschnitte 121c, 131c des ersten und zweiten Trägerkörperteils 120, 130 fixiert. Das andere freie Ende der magnetisch leitenden Blattfeder 115 ist dazu ausgebildet, sich in einer Federelementkavität 124 zu bewegen, und zwar in Reaktion auf ein sich zeitlich änderndes Magnetfeld, wie dies vorstehend im Detail beschrieben worden ist. In einer Ausführungsform kann die Federelementkavität 124 zum freien Ende des Federelements 115 hin trompetenförmig ausgebildet sein.

Die Figur 8a zeigt eine perspektivische Ansicht des Generators 100 des Drehgebers 200 gemäß einer Ausführungsform in horizontaler Anordnung sowie eine Detailansicht des Kontaktbereichs des Generators 100 mit den Kontaktabschnitten 140c, 150c. Figur 8b zeigt eine perspektivische Ansicht von Komponenten des Drehgebers 200 gemäß einer Ausführungsform mit einer Generatorträgerscheibe 210 und dem auf der Generatorträgerscheibe 210 in horizontaler Anordnung befestigten Generator 100 von Figur 8a.

Die Figur 9a zeigt eine perspektivische Ansicht des Generators 100 des Drehgebers 200 gemäß einer Ausführungsform in vertikaler Anordnung sowie eine Detailansicht des Kontaktbereichs des Generators 100 mit den Kontaktabschnitten 140c, 150c. Figur 9b zeigt eine perspektivische Ansicht von Komponenten des Drehgebers 200 gemäß einer Ausführungsform mit der Generatorträgerscheibe 210 und dem auf der Generatorträgerscheibe 210 in vertikaler Anordnung befestigten Generator 100 von Figur 9a.

## Patentansprüche

1. Drehgeber (200) zum Erfassen von Positions- und/oder Bewegungsinformationen einer rotierbaren Welle (400), wobei der Drehgeber (200) umfasst:
einen Generator (100) mit einem Trägerkörper (120, 130), einer Spule (160), die um einen Abschnitt (121b, 131b) des Trägerkörpers (120, 130) gewickelt ist, und einem magnetisch leitenden Federelement (115), wobei das Federelement (115) ausgebildet ist, in Reaktion auf ein sich zeitlich veränderndes Magnetfeld eine sprunghafte Hin- und Her - Bewegung durchzuführen und eine Spannung in der Spule (160) zu induzieren, um den Drehgeber (200) mit Energie zu versorgen; und
eine Vielzahl von Magnetsegmenten (230a-d), die mit der rotierbaren Welle in Wirkverbindung stehen, wobei die Vielzahl von Magnetsegmenten (230a-d) in Umlaufsrichtung aneinander angrenzend angeordnet und alternierend gepolt sind, um aufgrund einer Rotation der rotierbaren Welle (400) das Federelement (115) mit dem sich zeitlich verändernden Magnetfeld zu beaufschlagen, wobei ein nahtloser Übergang zwischen benachbarten Magnetsegmenten (230a-d) mit unterschiedlicher Polung besteht und die Vielzahl der Magnetsegmente (230a-d) ein Ringelement ausbilden, das umfangsseitig zur rotierbaren Welle (400) anordenbar und / oder dort festlegbar ist.

2. Drehgeber (200) nach Anspruch 1, wobei die Vielzahl von Magnetsegmenten (230a-d) durch alternierend magnetisierte Abschnitte (230a-d) eines Materialstücks ausgebildet sind.

3. Drehgeber (200) nach Anspruch 1, wobei die Vielzahl von Magnetsegmenten (230a-d) durch eine Vielzahl von alternierend magnetisierten und in Umlaufsrichtung formschlüssig aneinander angrenzenden Materialstücken (230a-d) ausgebildet sind.

4. Drehgeber (200) nach einem der vorhergehenden Ansprüche, wobei die Vielzahl von Magnetsegmenten (230a-d) die gleiche Größe und jeweils eine im Wesentlichen räumlich konstante Magnetisierung aufweisen.

5. Drehgeber (200) nach einem der vorhergehenden Ansprüche, wobei der Drehgeber (200) ferner eine Magnetträgerscheibe (220) umfasst, wobei die Vielzahl von Magnetsegmenten (230a-d) auf der Magnetträgerscheibe (220) ausgebildet sind und wobei die Magnetträgerscheibe (220) ausgebildet ist, bei einer Rotation der rotierbaren Welle (400) zu rotieren.

6. Drehgeber (200) nach einem der Ansprüche 1 bis 5, wobei die Vielzahl von Magnetsegmenten (230a-d) eine Vielzahl von Abschnitten (230a-d) eines Vollzylinders mit einem jeweiligen Querschnitt in Form eines Kreissektors umfassen.

7. Drehgeber (200) nach einem der Ansprüche 1 bis 5, wobei die Vielzahl von Magnetsegmenten (230a-d) eine Vielzahl von Abschnitten (230a-d) eines Hohlzylinders mit einem jeweiligen Querschnitt in Form eines Kreisringsektors umfassen.

8. Drehgeber (200) nach Anspruch 7, wobei die Vielzahl von Magnetsegmenten (230a-d) vier Magnetsegmente (230a-d) umfassen, wobei jedes der vier Magnetsegmente (230a-d) einen Querschnitt in Form eines Kreisringsektors mit einem Winkel von 90° aufweist.

9. Drehgeber (200) nach Anspruch 7 oder 8, wobei der Drehgeber (200) eine Vielzahl von weiteren Magnetsegmenten (240a-d) umfasst und ausgebildet ist, aufgrund der Vielzahl von weiteren Magnetsegmenten (240a-d) die Positions- und/oder Bewegungsinformationen der rotierbaren Welle (400) zu erfassen.

10. Drehgeber (200) nach Anspruch 9, wobei die Vielzahl von weiteren Magnetsegmenten (240a-d) eine Vielzahl von weiteren Abschnitten (240a-d) des Hohlzylinders mit einem jeweiligen Querschnitt in Form eines Kreisringsektors umfassen.

## Claims

1. Rotary encoder (200) for detecting position and/or movement information of a rotatable shaft (400), wherein the rotary encoder (200) comprises:
a generator (100) having a carrier body (120, 130), a coil (160) which is wound around a portion (121b, 131b) of the carrier body (120, 130), and a magnetically conductive spring element (115), wherein the spring element (115) is designed to carry out an abrupt back-and-forth movement in response to a time-varying magnetic field and to induce a voltage in the coil (160) in order to supply the rotary encoder (200) with energy; and
a plurality of magnet segments (230a-d) which are in operative connection with the rotatable shaft, wherein the plurality of magnet segments (230a-d) are arranged adjacent to one another in the circumferential direction and are alternately polarized in order to apply the time-varying magnetic field to the spring element (115) based on a rotation of the rotatable shaft (400), wherein there is a seamless transition between adjacent magnet segments (230a-d) which have different polarities, and the plurality of magnet segments (230a-d) form a ring element which can be arranged on the circumference of the rotatable shaft (400) and/or fixed thereto.

2. Rotary encoder (200) according to claim 1, wherein the plurality of magnet segments (230a-d) are formed by alternately magnetized portions (230a-d) of a material piece.

3. Rotary encoder (200) according to claim 1, wherein the plurality of magnet segments (230a-d) are formed by a plurality of alternately magnetized material pieces (230a-d) which are form-fittingly adjacent to one another in the circumferential direction.

4. Rotary encoder (200) according to any of the preceding claims, wherein the plurality of magnet segments (230a-d) have the same size and each have a substantially spatially constant magnetization.

5. Rotary encoder (200) according to any of the preceding claims, wherein the rotary encoder (200) further comprises a magnet carrier disc (220), wherein the plurality of magnet segments (230a-d) are formed on the magnet carrier disc (220), and wherein the magnet carrier disc (220) is designed to rotate during rotation of the rotatable shaft (400).

6. Rotary encoder (200) according to any of claims 1 to 5, wherein the plurality of magnet segments (230a-d) comprise a plurality of portions (230a-d) of a solid cylinder, having a relevant cross section in the form of a circular sector.

7. Rotary encoder (200) according to any of claims 1 to 5, wherein the plurality of magnet segments (230a-d) comprise a plurality of portions (230a-d) of a hollow cylinder, having a relevant cross section in the form of a circular ring sector.

8. Rotary encoder (200) according to claim 7, wherein the plurality of magnet segments (230a-d) comprise four magnet segments (230a-d), wherein each of the four magnet segments (230a-d) have a cross section in the form of a circular ring sector with an angle of 90°.

9. Rotary encoder (200) according to claim 7 or claim 8, wherein the rotary encoder (200) comprises a plurality of additional magnet segments (240a-d) and is designed to detect the position and/or movement information of the rotatable shaft (400) based on the plurality of additional magnet segments (240a-d).

10. Rotary encoder (200) according to claim 9, wherein the plurality of additional magnet segments (240a-d) comprise a plurality of additional portions (240a-d) of the hollow cylinder, having a relevant cross section in the form of a circular ring sector.

## Revendications

1. Encodeur rotatif (200) permettant la détection d'informations de position et/ou de mouvement d'un arbre rotatif (400), dans lequel l'encodeur rotatif (200) comprend :
un générateur (100) comportant un corps de support (120, 130), une bobine (160) enroulée autour d'une section (121b, 131b) du corps de support (120, 130), et un élément élastique (115) magnétiquement conducteur, dans lequel l'élément élastique (115) est conçu pour effectuer un mouvement de va-et-vient brusque en réponse à un champ magnétique variant périodiquement et pour induire une tension dans la bobine (160) afin d'alimenter l'encodeur rotatif (200) en énergie ; et
une pluralité de segments magnétiques (230a-d) en liaison active avec l'arbre rotatif, dans lequel les segments magnétiques de la pluralité de segments magnétiques (230a-d) sont disposés de manière à être contigus les uns aux autres dans la direction circonférentielle et sont polarisés de manière alternée afin de solliciter l'élément élastique (115) avec le champ magnétique variant périodiquement en raison d'une rotation de l'arbre rotatif (400), dans lequel une jonction sans soudure existe entre des segments magnétiques (230a-d) adjacents comportant des polarités différentes et la pluralité de segments magnétiques (230a-d) forme un élément annulaire pouvant être disposé et/ou fixé côté circonférence de l'arbre rotatif (400).

2. Encodeur rotatif (200) selon la revendication 1, dans lequel la pluralité de segments magnétiques (230a-d) est formée par des sections (230a-d) magnétisées en alternance d'une pièce de matériau.

3. Encodeur rotatif (200) selon la revendication 1, dans lequel la pluralité de segments magnétiques (230a-d) est formée par une pluralité de pièces de matériau (230a-d) magnétisées en alternance et contiguës les unes aux autres par complémentarité de forme dans la direction circonférentielle.

4. Encodeur rotatif (200) selon l'une des revendications précédentes, dans lequel les segments magnétiques de la pluralité de segments magnétiques (230a-d) sont de la même taille et présentent respectivement une aimantation sensiblement constante spatialement.

5. Encodeur rotatif (200) selon l'une des revendications précédentes, dans lequel l'encodeur rotatif (200) comprend en outre un disque de support magnétique (220), dans lequel la pluralité de segments magnétiques (230a-d) est formée sur le disque de support magnétique (220), et dans lequel le disque de support magnétique (220) est conçu pour tourner lors d'une rotation de l'arbre rotatif (400).

6. Encodeur rotatif (200) selon l'une des revendications 1 à 5, dans lequel la pluralité de segments magnétiques (230a-d) comprend une pluralité de sections (230a-d) d'un cylindre plein comportant une section transversale respective en forme de secteur circulaire.

7. Encodeur rotatif (200) selon l'une des revendications 1 à 5, dans lequel la pluralité de segments magnétiques (230a-d) comprend une pluralité de sections (230a-d) d'un cylindre creux comportant une section transversale respective en forme de secteur d'anneau circulaire.

8. Encodeur rotatif (200) selon la revendication 7, dans lequel la pluralité de segments magnétiques (230a-d) comprend quatre segments magnétiques (230a-d), dans lequel chacun des quatre segments magnétiques (230a-d) présente une section transversale en forme de secteur d'anneau circulaire comportant un angle à 90°.

9. Encodeur rotatif (200) selon la revendication 7 ou 8, dans lequel l'encodeur rotatif (200) comprend une pluralité d'autres segments magnétiques (240a-d) et est configuré pour détecter les informations de position et/ou de mouvement de l'arbre rotatif (400) sur la base de la pluralité d'autres segments magnétiques (240a-d).

10. Encodeur rotatif (200) selon la revendication 9, dans lequel la pluralité d'autres segments magnétiques (240a-d) comprend une pluralité d'autres sections (240a-d) du cylindre creux comportant une section transversale respective en forme de secteur d'anneau circulaire.
